# EUROPEAN PATENT APPLICATION

(11) **EP 3 466 608 A1**
(43) Date of publication of application: **10.04.2019**
(21) Application number: 16903012.9
(22) Date of filing: 25.05.2016
(51) Int. Cl.: B23Q 17/20

(54) **MACHINE TOOL HEAD HAVING MEASURING DEVICE**

(71) Applicant: Zayer, S.A., 01013 Vitoria-Gasteiz (Alava) (ES)
(72) Inventor: CALLEJA MARTÍNEZ, Luis, 01013 Vitoria-Gasteiz (Álava) (ES); ORIVE DE DIEGO, Javier, 01013 Vitoria-Gasteiz (Álava) (ES); RIVERO RASTRERO, Asun, 01013 Vitoria-Gasteiz (Álava) (ES); RUBIO MATEOS, Antonio, 01013 Vitoria-Gasteiz (Álava) (ES)
(74) Representative: Capitán García, Maria Nuria
(86) International application number: PCT/ES2016/070394
(87) International publication number: WO 2017/203068

(57) **Abstract**

Machine tool head with measuring device to measure the thickness of a workpiece to be machined with a tool, comprising a first non-contact sensor, wherein the first sensor is attached to a first support which is integral with a crown that moves by the action of a pinion moved by a motor such that the first sensor is located ahead of the tool according to the forward direction thereof.

## Description

### FIELD OF THE INVENTION

The present invention is encompassed in the field of machine tools, in particular heads with measuring devices to measure the thickness of the workpiece to be machined.

### BACKGROUND OF THE INVENTION

Since the geometry of the actual workpiece may have certain deviations relative to the theoretical CAD/CAM, a system is required that is able to adjust the position of the tool in depth, thickness of the workpiece throughout the trajectory of the tool. The tolerances of the final machined thickness, in workpieces having a relative low thickness such as aircraft panels, known as skins, are critical. Deviations may be due to:
- Deviation in the positioning of the pillars or supports.
- The thickness tolerance of the supports of the machining tool.
- The thickness tolerance of the workpieces to be machined.
- Possible error in previous machining passes.

A machine with a double head is known in which an ultrasound measuring device is provided on a head located on the opposite side relative to the machining side which, although it does not come into contact with the workpiece, needs a coupling fluid to perform the measurement. The main drawback of this solution is that it is an expensive solution, since to get the sensor to move along at the same time as machining, a second head synchronised with the machining head is required. Moreover, the fact of measuring on the opposite side of the workpiece makes it impossible to use any kind of static support during the machining.

Furthermore, it does not allow the simultaneous process of milling, edge milling and through-hole drilling, since ultrasound monitoring is only oriented to milling. To perform edge milling and drilling the machine would need to be taken to another configuration of supports and anchorage of the machined workpiece. Finally, this solution uses a coupling fluid which implies the need for a fluid collection system and a cleaning stage of the machined workpiece.

Also known is a measurement in a wider area with sensors that are in contact with the workpiece and which further serve as support for milling. This is an expensive solution, as it needs a second commanded head to be directed as support to the machining area. It therefore presents the same problems as the previous ones, except for the use a couplant.

Finally, measuring the thickness of the workpiece at several points before starting to machine is also known. With these measures, the trajectory of the tool is readjusted and machining is performed. It presents the problems of the preceding cases, but additionally has the problem that in being a pre-machining measurement, it cannot adapt its trajectory to possible variations that occur during the process. It adds an additional step to the process, the measurement step.

### DESCRIPTION OF THE INVENTION

The present invention is established and characterised in the independent claims, while the dependent claims describe other characteristics thereof.

The object of the invention is a machine tool head with a measuring device that allows to adapt the trajectory of the tool for proper machining by using a non-contact sensor. The technical problem addressed is designing the components so that the aforementioned object is achieved.

One advantage is that it is a low-cost device, since it only requires the addition of a single rotation shaft to ensure that the sensor goes ahead of the machining tool along the machining trajectory.

Another advantage is that since it is a solution for measuring on the same side as the machining, it is compatible with any fixed or flexible support tool.

Another advantage is that since it leaves the opposite side of the workpiece free, settings need not be changed for edging and through-hole drilling processes.

Another advantage is that, despite the fact that the ultrasound option entails a higher cost, the fact that it does not use a couplant has a positive impact on the cost of maintenance, both for the collection of this type of fluid and by eliminating a cleaning step of the skin after the machining thereof.

### BRIEF DESCRIPTION OF THE FIGURES

This specification is supplemented with a set of drawings illustrating the preferred embodiment, which are never intended to limit the invention.
Figure 1 represents a profile view of the head with a measuring device with a first distance or laser-type sensor.
Figure 2 represents a perspective view of the head with a measuring device with a first ultrasonic-type sensor.
Figure 3 represents a second support for the first ultrasonic-type sensor and a second distance sensor.
Figure 4 represents a cross section of the second support of Figure 3.
Figure 5 represents a profile view of the head with a measuring device with a first and a third sensor.

### DETAILED DESCRIPTION OF THE PREFERRED EMBODIMENT OF THE INVENTION

An embodiment of the invention is described below with reference to the figures.

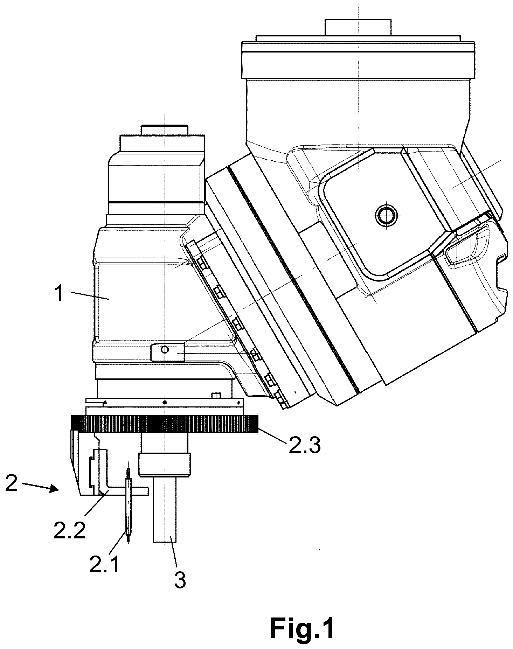

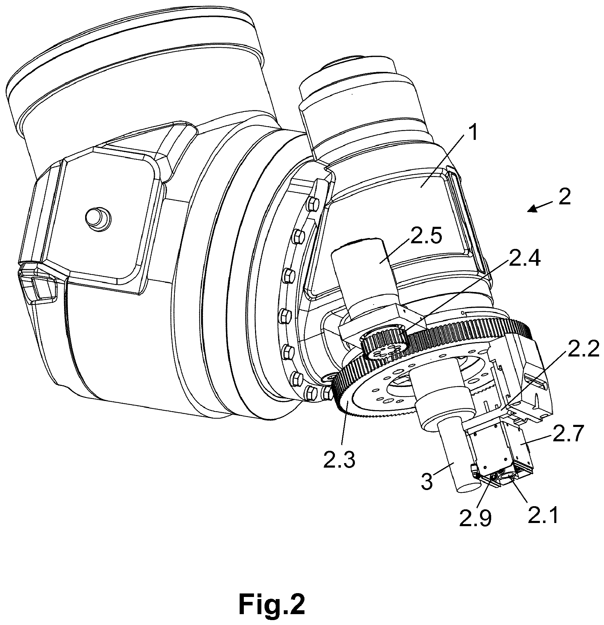

Figure 1 shows a machine tool head (1), typically for machining such as milling, with a measuring device (2) for measuring the thickness of a workpiece with a tool (3), comprising a first non-contact sensor (2.1), wherein said first sensor (2.1) is attached to a first support (2.2) which is integral with a crown (2.3) which is moved by the action of a pinion (2.4) moved by a motor (2.5), see figure 2, such that the first sensor (2.1) is situated ahead of the tool (3) according to the forward direction thereof.

One option is that the first sensor (2.1) is a distance or laser sensor. An advantage of this option is that the cost of the device is relatively small compared to other options that require more components such as the one with the ultrasound-type sensor explained below.

Advantageously, the following conditions are more suitable when using a single first sensor (2.1):
- That the supporting surface of the workpiece is known and has no deviations.
- The thickness tolerance of the workpieces to be machined are within the tolerances required in the machining.

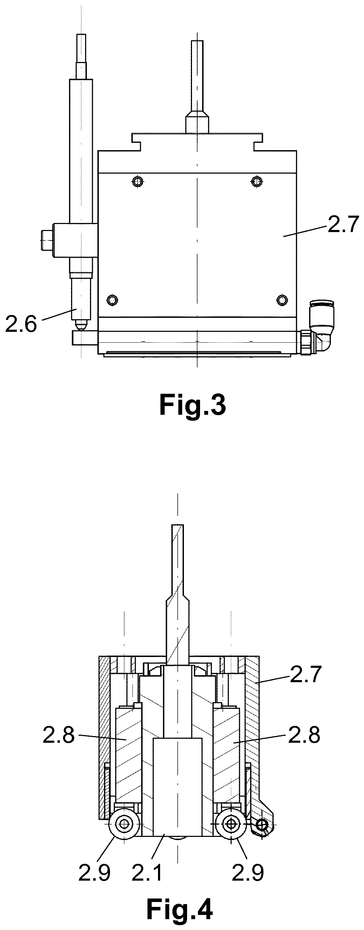

Another option, which somewhat avoids the aforementioned conditions, is that the first sensor (2.1) is ultrasound, in addition in the first support (2.2) a second distance sensor (2.6) is provided, Figure 3. In particular, it is preferred that the ultrasound sensor is a non-contact type (EMAT, Electromagnetic Acoustic Transducer) because it does not require a couplant (grease, water, etc), and eliminates the need to clean the skins and all the couplant management; although the device described is equally valid with any other ultrasound sensor with couplants. The second distance sensor (2.6) (contact or non-contact) indicates the position of the first ultrasound sensor (2.1) with respect to the position of the machining tool (3). In the case of machining curved plates, since there may be errors (thickness tolerance, positioning, etc.) this distance will change. The measurement thereof is made as soon as the device (2) goes up or down.

The combination of the two signals, that of the first ultrasound sensor (2.1) and that of the second distance sensor (2.6), is compared with the trajectory of the original CAM design and is readjusted so that the machining of the workpiece can obtain the desired final thickness, fulfilling, for example, the strict requirements of the aeronautical sector.

Optionally, the first (2.1) and second (2.6) sensors are connected to the first support (2.2) by means of a second support (2.7), see Figures 3 and 4. In an advantageous way it is added that on the second support (2.7) there is also at least one pin (2.8) with a wheel (2.9) at one of its ends, able to rest on and run along the workpiece, thus a simple mechanical element is available to guarantee a minimum distance in addition to being able to avoid accidental collisions with the workpiece.

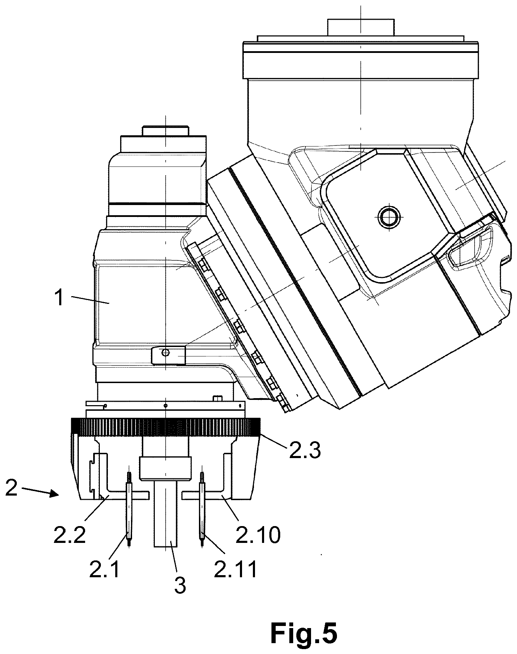

Another added option is that a third support (2.10) is provided with a third sensor (2.11) so that it is located behind the tool (3) according to the forward direction thereof, Figure 5, being either ultrasound or laser. If it is ultrasound it allows to measure the remaining thickness in the workpiece; if it is laser, with the first sensor (2.1) it allows to measure where the tool (3) is on the upper side of the workpiece before machining and with the third sensor (2.11) it is possible to know where the upper side thereof is situated after machining, therefore, the difference in the position of the upper side between before and after machining has to match the value commanded to the tool (3) to be lowered at that point.

## Claims

1. Machine tool head (1) with measuring device (2) to measure the thickness of a workpiece to be machined with a tool (3), comprising a first non-contact sensor (2.1), **characterised in that** said first sensor (2.1) is attached to a first support (2.2) which is integral with a crown (2.3) which moves by action of a pinion (2.4) moved by a motor (2.5), such that the first sensor (2.1) is located ahead of the tool (3) according to the forward direction thereof.

2. A head according to claim 1 wherein the first sensor (2.1) is a distance or laser sensor.

3. Head according to claim 1 wherein the first sensor (2.1) is ultrasound, in addition in the first support (2.2) a second distance sensor (2.6) is provided.

4. Head according to claim 3 wherein the first (2.1) and second (2.6) sensors are connected to the first support (2.2) by means of a second support (2.7).

5. Head according to claim 4 wherein the second support (2.7) is further provided with at least one pin (2.8) with a wheel (2.9) at one of its ends, able to rest on and run along the workpiece.

6. Head according to any of the preceding claims wherein a third support (2.10) is provided with a third sensor (2.11) such that it is located behind the tool (3) according to the forward direction thereof.

7. Head according to claim 6 wherein the third sensor (2.11) is ultrasound or laser.
